**Europäisches Patentamt**

**European Patent Office**

**Office européen des brevets**

(11) Veröffentlichungsnummer: **0 189 005**
**B1**

(12)

# EUROPÄISCHE PATENTSCHRIFT

(45) Veröffentlichungstag der Patentschrift:
**12.10.88**

(21) Anmeldenummer: **85810614.9**

(22) Anmeldetag: **23.12.85**

(51) Int. Cl.⁴: **B 65 G 53/20**

(54) **Förderrinne für den Transport von staubförmigen oder feinkörnigen, trockenen Schüttgütern und ein Verfahren zu deren Betrieb.**

(30) Priorität: **15.01.85 CH 177/85**

(43) Veröffentlichungstag der Anmeldung:
**30.07.86 Patentblatt 86/31**

(45) Bekanntmachung des Hinweises auf die Patenterteilung:
**12.10.88 Patentblatt 88/41**

(84) Benannte Vertragsstaaten:
**AT BE CH DE FR GB IT LI NL SE**

(56) Entgegenhaltungen:
**US-A-2 882 097**
**US-A-4 033 555**

(73) Patentinhaber: **SCHWEIZERISCHE ALUMINIUM AG, CH- 3965 Chippis (CH)**

(72) Erfinder: **Merz, Walter, Allmendboden 31, CH- 8700 Küsnacht (CH)**

## Beschreibung

Die Erfindung bezieht sich auf eine Förderrinne, welche mindestens je einen geschlossenen Förderkanal, einen geschlossenen Fluidisierkanal mit Zufuhrrohr, einen dazwischen liegenden Fluidisierboden und ein Aussenrohr umfasst und etwa horizontal verläuft, für den Transport von staubförmigen oder feinkörnigen, trockenen Schüttgütern mit einem Förderbereich und einem durch ein gas- und flüssigkeitsdurchlässiges Material abgetrennten Bereich für die Zufuhr des Fluidisiermediums. Weiter betrifft die Erfindung ein Verfahren zum Betrieb der Förderrinne.

Das Prinzip der Förder- bzw. Fluidisierrinne wird beispielsweise in den Handbüchern "Fördertechnik", Jahrgang 1967, VEB Verlag Technik Berlin, auf den Seiten 280 und 281, sowie dem Techniker-Handbuch, Ausgabe 1979, des Friedrich Vieweg & Sohn-Verlags, Braunschweig/Wiesbaden, beschrieben.

Aus den Schriften US-A-2 882 097 und US-A-4 033 555 sind Förderrinnen der eingangsgenannten Art bekannt, wobei im Boden, auf dem das Schüttgut lagert, Düsen angeordnet sind, durch die das Schüttgut in die gewünschte Richtung gefördert wird.

Fluidisierrinnen werden beispielsweise in der Zement-, Aluminium-, Chemie- und Nahrungsmittel-Industrie eingesetzt. Als Vorteile gegenüber den mechanischen Fördermitteln sind die einfache Konstruktion, der geringe Energiebedarf und damit die bessere Wirtschaftlichkeit von Bedeutung.

Je nach Beschaffenheit des Fördergutes, Förderleistung und Förderstrecke liegt der Energieverbrauch einer bis 10 % geneigten Förderrinne für eine Transportstrecke von 100 m zwischen 0,04 KWh/t und 0,075 KWh/t. Im Vergleich dazu werden bei Dünnstromförderung auf 100 m Länge 1,5 bis 3 KWh/t, ebenfalls bei einem vorhandenen Gefälle bis 10 %, benötigt.

Der Erfinder hat sich die Aufgabe gestellt, eine Förderrinne der eingangsgenannten Art zu verbessern und ein Verfahren zum Betrieb der Förderrinne anzugeben.

Erfindungsgemäss wird die gestellte Aufgabe durch eine Vorrichtung gelöst, welche sich nach dem Wortlaut des Anspruchs 1 auszeichnet. Vorteilhafte Weiterbildungen der erfindungsgemässen Vorrichtung sind durch die Merkmale der Ansprüche 2 bis 9 gekennzeichnet. Bezüglich des Verfahrens wird die gestellte Aufgabe durch die Merkmale nach Anspruch 10 gelöst. Die Merkmale des Anspruchs 11 kennzeichnen ein vorteilhafte erfinderische Verfahrensvariante.

Im allgemeinen ist die Förderrinne horizontal angeordnet. Das konstruktive Gesamtkonzept der Förderanlage kann es jedoch erforderlich machen, dass

- die Förderrinne leicht abwärts geneigt ist, wobei die Schwerkraft für eine wirtschaftliche Vorwärtsbewegung des Förderguts jedoch nicht ausreicht, beispielsweise bei einer Abwärtsneigung bis zu 2°, oder
- die Förderrinne leicht ansteigend angeordnet werden muss.

Bei leicht abwärts geneigten Förderrinnen ist der Energieaufwand kleiner, bei leicht ansteigenden entsprechend grösser. In der Regel können mit der erfindungsgemässen Förderrinne Steigungen bis 10° wirtschaftlich überwunden werden.

Der Fluidisierboden ist in bekannter Weise ausgebildet, er besteht aus Geweben (beispielsweise aus Baumwolle, Baumwolle-Kunststoff oder Polyesterfasern), offenporigen Sintermetall- oder Keramikplatten.

Als Treibmedium wird ein Gas oder eine Flüssigkeit eingesetzt. Sinngemäss spricht man von einer pneumatisch oder einer hydraulisch betriebenen Förderrinne. In der Praxis wird in erster Linie Luft eingesetzt. Zum Erzeugen oder Verhindern von chemischen Reaktionen, zum Wärmen oder Kühlen können jedoch die entsprechenden Treibmedien eingesetzt werden.

Das Aussenrohr hat beispielsweise, je nach der Kapazität der Förderrinne, einen Durchmesser von 5 bis 80 cm und kann ebensogut aus einem Metall, insbesondere Stahl oder Aluminium, wie aus einem druckfesten Kunststoff bestehen. Vorzugsweise werden die Aussenrohre in bezug auf den Querschnitt kreisrund ausgestaltet, damit sie mit einer einfachen Kupplung zusammen montiert werden können. Das Vortriebsmedium wird in das dichtend zusammengekuppelte Aussenrohr eingeleitet und füllt den nicht von dem Förderkanal bzw. den Förderkanälen und dem Fluidisierkanal bzw. den Fluidisierkanälen eingenommenen Innenraum. Von diesem kommunizierenden Innenraum aus kann das Vortriebsmittel durch die Vortriebsdüsen in den Förderkanal eintreten.

Die im untersten Bereich der Seitenwand des/der Förderkanals/Förderkanäle auf einer Höhe von beispielsweise 1 - 5 cm angeordneten Vortriebsdüsen sind in bezug auf die gegenüberliegende Seitenwand gleichständig angeordnet. Wären diese Düsen wechselständig angeordnet, würde das Fördergut während der Vorwärtsbewegung hin- und hergeschleudert, was neben einer unerwünschten zusätzlichen Staubentwicklung einen geringeren Wirkungsgrad zur Folge hätte. In der Praxis hat es sich als vorteilhaft erwiesen, die Vortriebsdüsen in einem Abstand von 3 - 10 cm, alle auf gleichem Niveau, anzuordnen.

Bei einem breiten Förderkanal verlieren die seitlich angeordneten Vortriebsdüsen in Richtung der Mittellinie allmählich ihre Wirkung. Deshalb werden bei breiter als 10 cm ausgebildeten Förderrinnen zweckmässig eine der beiden Massnahmen ergriffen:

- Statt eines Förderkanals werden mehrere, getrennte Förderkanäle angeordnet, die in den Seitenwänden Vortriebsdüsen haben, die vom Innenraum für das Vortriebsmedium gespeist werden.

- Auf dem Niveau der in den Seitenwänden angeordneten Vortriebsdüsen wird in Förderrichtung auf derselben Höhe mindestens ein Rohr eingezogen, das beidseits Vortriebsdüsen hat, die denjenigen in den Seitenwänden entsprechen. Anstelle eines Rohres kann auch eine den Förderkanal mindestens teilweise trennende Scheidewand mit Vortriebsdüsen angeordnet werden.

Die Vortriebsdüsen haben in bezug auf die Seitenwände des Förderkanals/der Förderkanäle bzw. der Rohre oder der Scheidewände in der Horizontalebene einen Winkel $\alpha$ von vorzugsweise 10 bis 30°. Das Vortriebsmedium wird also derart in das Fördergut eingespeist, dass die Hauptkomponente in Förderrichtung einwirkt. Das Fördermedium dringt jedoch auch gegen die Mitte des Förderkanals vor und erzeugt so eine angenähert laminare Strömung. Die Vortriebsdüsen selbst sind aus den entsprechenden Wänden ausgespart, als separates Teil eingesetzt oder ausgeformt. Nach einer Variante sind sie als Düseneinsätze in Form von Einzeldüsen oder Düsenleisten ausgebildet. Die bevorzugt kreisrunde Bohrung der Düsen hat beispielsweise einen Durchmesser von 1 - 2 mm. Es können jedoch auch vertikale oder nahezu vertikale Schlitze mit entsprechendem horizontalen Winkel $\alpha$ hergestellt bzw. entsprechende Düsen eingesetzt werden.

In einem breit ausgebildeten Förderkanal werden vorzugsweise Vortriebsdüsen im Fluidisierboden verankert. Diese können allein oder im Zusammenwirken mit den oben beschriebenen in den Seitenwänden des Förderkanals angeordneten Vortriebsdüsen auf das Fördergut einwirken.

Die den Fluidisierboden durchgreifenden Vortriebsdüsen sind in einem Stützboden verankert. Diese Vortriebsdüsen haben eine vertikale Bohrung, die in eine leicht nach oben weisende Austrittsbohrung übergeht. Die Austrittsbohrung dieser Vortriebsdüsen ist nicht horizontal, damit der Fluidisierboden nicht gespült und damit abgenützt wird.

Die im Stützboden verankerten Vortriebsdüsen sind entsprechend der Struktur dieses Bodens regelmässig angeordnet und können quer zur Förderrichtung einen Abstand von 2 bis 5 cm, in Förderrichtung einen Abstand von 3 bis 10 cm haben.

Die Düsen sind so geformt und eingesetzt, dass sie in Strömungsrichtung ein möglichst kleines Stauprofil geben. Zur weiteren Minimalisierung dieser Stauprofile werden vorzugsweise folgende Massnahmen getroffen:

- die Achsen der Austrittsbohrungen verlaufen nicht exakt in Förderrichtung, sondern sind leicht seitlich abgedreht, derart, dass die Vertikalebene durch die Längsachse einer Vortriebsdüse von der Vertikalachse der in Förderrichtung nächsten Vortriebsdüse einen Abstand hat, der zweckmässig dem 2 bis 3-fachen Durchmesser der Austrittsöffnung entspricht, und/oder
- die Vortriebsdüsen in Förderrichtung sind wechselständig angeordnet.

Die Vortriebsdüsen weichen also nur wenig von der Förderrichtung ab, in der Regel höchstens 5°, weil durch eine zunehmende Abweichung der Energieaufwand bedeutend erhöht wird.

Da sich das Fluidisier- und Vortriebsmedium im Förderkanal vereinigen, bestehen sie zweckmässig aus demselben Material. Die Medien können dann problemlos aus demselben Antriebsaggregat stammen, aber sie müssen in separaten Zufuhrleitungen in die Förderrinne gebracht werden.

Die erfindungsgemässe Förderrinne ist geeignet, bei speziellen Verwendungen neben dem reinen Transport noch andere Funktionen zu übernehmen. So können im Förderkanal bzw. in den Förderkanälen, im Fluidisierkanal bzw. in den Fluidisierkanälen und/oder im Kanal bzw. in den Kanälen für das Vortriebsmedium Vorrichtungen angebracht werden, die das Fördergut heizen oder kühlen, es trennen oder sichten, es verbrennen und/oder adsorbieren. Je nach der gewünschten Nebenreaktion werden entsprechende Vorrichtungen angebracht und das Material in der Förderrinne behandelt.

Die ganze Förderrinne ist so konzipiert, dass keine Schrauben notwendig sind.

Bei dem erfindungsgemässen Verfahren wird der verhältnismässig geringe Überdruck im Falle von flüssigen Vortriebsmedien zweckmässig mit zwei Pumpen, im Falle von gasförmigen Vortriebsmedien zweckmässig mit zwei Gebläsen erzeugt. Durch Einschaltung entsprechender Reduzierstücke können die beiden unterschiedlichen Überdrucke jedoch auch mittels einer Pumpe bzw. eines Gebläses erzeugt werden.

Obwohl das Fördergut möglichst laminar durch die Förderrinne transportiert wird, entsteht im oberen Teil des Förderkanals bzw. der Förderkanäle etwas Staub, weshalb dieser/diese geschlossen ausgebildet ist/sind. Vorzugsweise wird im Förderkanal bzw. in den Förderkanälen ein relativer Unterdruck von beispielsweise 20 mm WS angelegt und so die verstaubte Atmosphäre abgezogen und der Reinigung zugeführt.

Die Erfindung kann für alle Schüttgüter mit einer Korngrösse $\leqslant$ 1 mm verwendet werden, z. B.:

- In der Aluminiumindustrie zum Überführen von Tonerde in Silos, zu Elektrolysehallen und zur Speisung der Elektrolysezellen. Weiter zur Adsorption von Fluoriden auf Tonerde, von Schwefel auf Kalk und von Schwefel- und Pechdämpfen auf Kohlenstoff.

- In Kohlekraftwerken zum Transport der pulverisierten Kohle und zum Transport und Kühlen von Asche.

- In der chemischen Industrie zum Transport, Kühlen oder Erwärmen von Vinyl- und Styrolpulvern, Russ, Düngern, Harnstoffen, Karbiden und abrasiven Materialien.

- In der Nahrungsmittelindustrie zum Transport von Nahrungsmitteln, Mehl und feinkörnigem Saatgut.

- In der Holz- und Papierindustrie zum Transport von Sägemehl, Füllstoffen von Papier und Chemikalien zum Bleichen.

- In der Zementindustrie zum Transport und Kühlen von Ziegelmehl und Zusatzstoffen für die Herstellung von Ziegelsteinen, Portlandzement, gemahlener Kohle und Kalk.

Die erfindungsgemässe Vorrichtung ist für den Transport von Schüttgutmengen von 100 kg bis 1000 Tonnen pro Stunde gut geeignet.

Die Erfindung wird anhand der Zeichnung beispielsweise näher erläutert. Die schematischen Schnitte bzw. Risse zeigen in

- Fig. 1 das Grundkonzept einer Förderrinne im Aufriss,
- Fig. 2 einen Grundriss von Fig. 1,
- Fig. 3 einen Querschnitt durch eine Förderrinne mit einem Förderkanal,
- Fig. 4 einen Horizontalschnitt bei IV-IV von Fig. 3,
- Fig. 5 einen vertikalen Längsschnitt durch die Achse von Fig. 3,
- Fig. 6 einen Querschnitt durch eine Förderrinne mit vier Förderkanälen,
- Fig. 7 einen Horizontalschnitt durch VII-VII von Fig. 6,
- Fig. 8 einen Querschnitt durch eine Förderrinne mit in einem Stützboden verankerten Vortriebsdüsen,
- Fig. 9 einen Horizontalschnitt durch IX-IX von Fig. 8,
- Fig. 10 einen vertikalen Längsschnitt durch eine im Stützboden verankerte Vortriebsdüse, und
- Fig. 11 einen Vergleich der Leistungsaufnahme eines Schneckenförderers (Sch), einer bekannten Förderrinne (R) und der erfindungsgemässen Förderrinne (MFC).

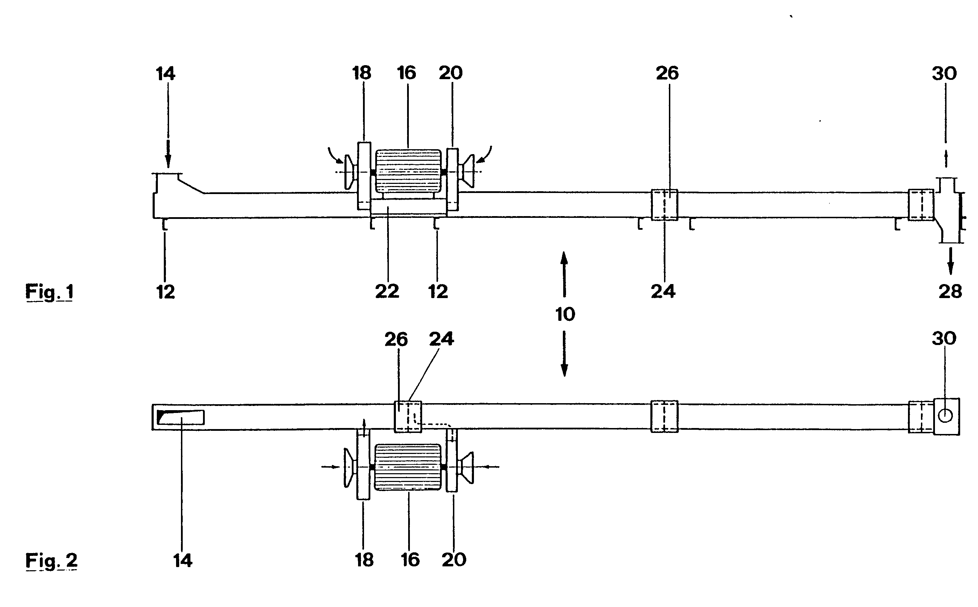

Die in den Fig. 1 und 2 dargestellte Förderrinne 10 ist auf einer Tragkonstruktion 12 abgestützt. Der Materialzulauf 14 und das erste Element der Förderrinne sind einstückig ausgebildet. Im Verbindungsbereich des ersten und zweiten Elements der Förderrinne 10 ist ein Gebläse für Druckluft angeordnet, welche sowohl als Fluidisier- als auch als Vortriebsmedium eingesetzt wird. Das Gebläse 18 führt Druckluft zum Fluidisierboden, das Gebläse 20 zu den Vortriebsdüsen. Der Lufteintritt in die Gebläse ist mit Pfeilen charakterisiert.

Die Elektromotor 16 und Gebläse 18, 20 tragende Konsole 22 verdeckt in Fig. 1 den Rinnenstoss 24. Über die Rinnenstösse 24 ist eine übliche Kupplung 26 angeordnet, welche eine luftdichte Verbindung der Elemente der Förderrinne gewährleistet.

Am Ende der Förderrinne 10 ist ein Abschlusselement angekuppelt, das nach unten einen Materialablauf 28 und nach oben eine Abluftöffnung 30 hat.

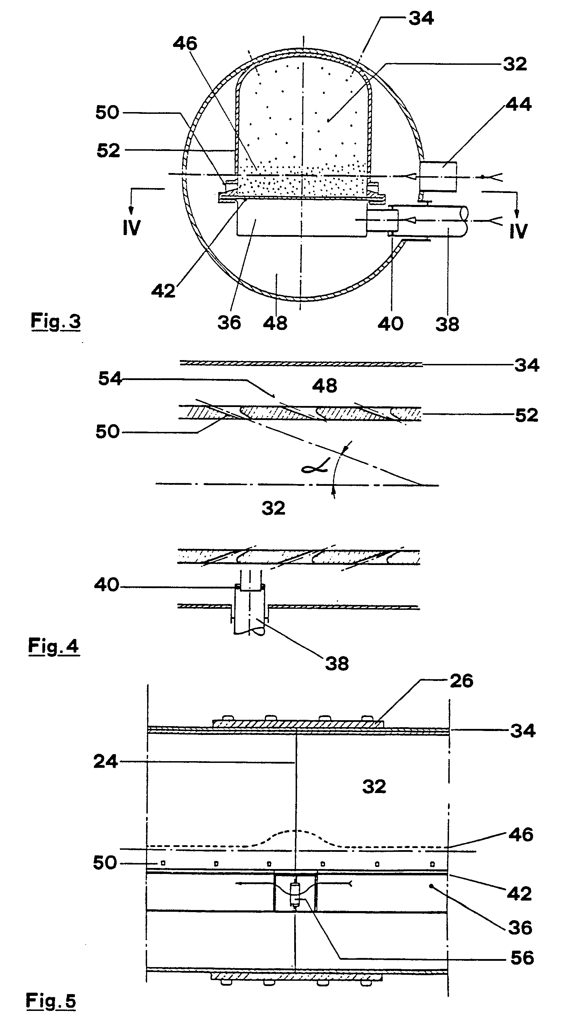

Die in Fig. 3 dargestellte Förderrinne hat einen etwas über 10 cm breiten Förderkanal 32. Dieser ist im oberen Bereich an das geschlossene Aussenrohr 34 angepasst und mit diesem verbunden.

Unterhalb des Förderkanals 32 schliesst ein gleich breiter Fluidisierkanal 36 an, in welchen eine Zufuhrleitung 38 für die Fluidisierluft mündet. Diese Zufuhrleitung besteht aus ineinandergeschobenen Rohren, die mit Dichtungsringen 40 versehen sind.

Zwischen dem Fluidisier- und dem Förderkanal ist der horizontale Fluidisierboden 42 angeordnet. Der Fluidisierboden 42 besteht aus einem Gewebe aus Polyesterfasern und ist seitlich über die ganze länge eingebördelt und verleimt. Auf dem Fluidisierboden 42 liegt eine etwa 7 cm hohe Schicht aus Fördergut 46, von welcher ein kleiner Teil als Staub aufgewirbelt ist.

In das Aussenrohr 34 mündet eine Zufuhrleitung 44 für die Vortriebsluft. Die zugeführte Vortriebsluft füllt den ganzen Hohlraum 48 im Aussenrohr 34, der nicht vom Förderkanal 32, dem Fluidisierkanal 36 und den Zufuhrleitungen beansprucht wird. Durch im untersten Bereich der Seitenwände 52 des Förderkanals 32 angeordnete Vortriebsdüsen 50 tritt die Vortriebsluft in das fluidisierte Fördergut ein und verschiebt dieses in Förderrichtung.

Aus Fig. 4 ist ersichtlich, wie die Vortriebsdüsen 50 mit einem Winkel $\alpha$ von etwa 25° durch die Seitenwand 52 des Förderkanals 32 geführt werden und dadurch die eingespeiste Luft das - in dieser Figur nicht eingezeichnete - Fördergut vorwärts treibt. Nicht ersichtlich ist, dass die Vortriebsdüsen 50 in bezug auf ihre Horizontalebene leicht (2-5°) nach oben weisen, damit das Gewebe des Fluidisierbodens nicht ausgespült wird.

Die Vortriebsdüsen 50 sind aus der Seitenwand 52 des Förderkanals 32 ausgespart. Sie können jedoch auch durch Spritz- oder Präzisionsguss hergestellt und einzeln oder als Leiste eingesetzt sein.

Die durch den Hohlraum 38 fliessende und in die Vortriebsdüsen 50 eintretende Vortriebsluft ist durch einen Pfeil 54 charakterisiert.

In Fig. 5 wird ein Rinnenstoss 24 detailliert dargestellt. Die kreisrunden Aussenrohre 34 der Förderrinne werden im Verbindungsbereich mit einer Kupplung 26 luftdicht verschlossen.

Im Bereich des Rinnenstosses ist im Fluidisierkanal 36 eine Durchführung 56 für die Fluidisierluft ausgebildet. In diesem Bereich ist der Fluidisierboden 42 verleimt, es kann deshalb keine Fluidisierluft durchtreten. Das Fördergut 46 ist nur angedeutet, es ist jedoch gut sichtbar, dass es unter Ausbildung eines Buckels über die Verleimungsstelle des Fluidisierbodens 42 fliesst.

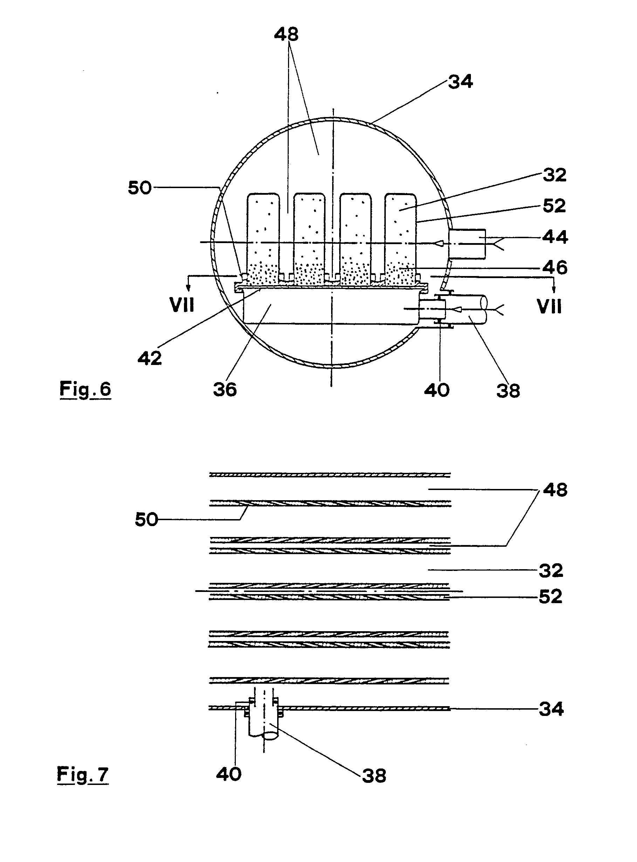

Die Figuren 6 und 7 unterscheiden sich von den Figuren 3 und 4 dadurch, dass nicht ein, sondern mehrere Förderkanäle 32 ausgebildet sind. Dies ist wegen der in bezug auf die Breite der Förderkanäle 32 beschränkten Einwirkung der Vortriebsdüsen 50 erforderlich. Alle Vortriebsdüsen 50 werden von Vortriebsluft aus dem kommunizierenden Hohlraum 48 gespeist.

Der Fluidisierboden 42 und der Fluidisierkanal 36 erstrecken sich über die Breite aller Förderkanäle 32 und sind nicht unterteilt.

Aus Fig. 7 ist ersichtlich, dass alle Vortriebsdüsen 50 gleichständig angeordnet sind. Bei wechselständiger Anordnung würde das Fördergut bei der Vorwärtsbewegung im Förderkanal 32 hin- und hergeschleudert.

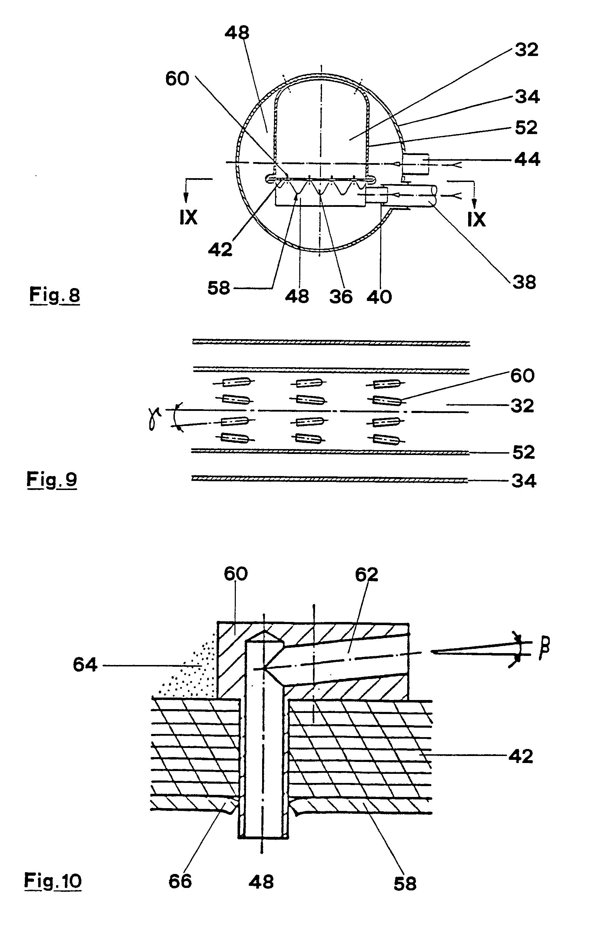

Die in den Fig. 8 und 9 dargestellte Förderrinne ist ebenfalls für grosse Förderkapazitäten konzipiert. Der etwa 50 cm breite Förderkanal 32 hat in der Seitenwand 52 des Förderkanals 32 entsprechend den Fig. 3 und 4 angeordnete Vortriebsdüsen 50, die jedoch der Übersichtlichkeit wegen nicht dargestellt sind.

Der Fluidisierboden 42 wird durch einen Stützboden 58 getragen. Dieser ist im Querschnitt wellenförmig ausgebildet, weist also mehrere in Längsrichtung der Förderrinne verlaufende Fluidisierkanäle 36 auf. In den Auflageflächen des Fluidisierbodens 42 auf dem Stützboden 58 sind Vortriebsdüsen 60 mit abgewinkelter Bohrung im Stützboden verankert. Diese Vortriebsdüsen 60 werden aus dem kommunizierenden Hohlraum 48 gespeist.

In Fig. 9 kann gut erkannt werden, dass die Vortriebsdüsen 60 nicht exakt in Förderrichtung verlaufen, sondern um den Winkel γ abgedreht sind. Der Winkel γ liegt bei der Ausführungsform nach Fig. 9 bei etwa 5°. So blasen sich direkt hintereinanderliegende Vortriebsdüsen 60 nicht an.

Fig. 10 zeigt vergrössert eine Vortriebsdüse 60 mit abgewinkelter Austrittsbohrung 62. Die Achse dieser zur Austrittsöffnung führenden Bohrung verläuft gegenüber der Horizontalen um den Winkel β aufsteigend, damit der Fluidisierboden nicht ausgeblasen wird. Der Winkel β beträgt im vorliegenden Fall 5°.

Obwohl der äussere Querschnitt der Vortriebsdüsen 60 so klein wie möglich gehalten ist, bildet sich vor jeder Düse ein Stauprofil 64 von Schüttgut. In Fig. 10 ist nur dieses Stauprofil 64 eingezeichnet und das übrige Schüttgut einfachheitshalber weggelassen.

Vor Einsetzen der Vortriebsdüsen wird in diese von unten ein spitzer Stahldorn eingesetzt. Die Düse mit dem Dorn wird dann durch das den Fluidisierboden 42 bildende Gewebe und den Stützboden 58 getrieben, bis die Düse satt auf dem Fluidisierboden 42 aufliegt. Im Stützboden 58 bildet sich ein Brauen 66, welcher die eingesetzte Vortriebsdüse 60 dichtend verklemmt.

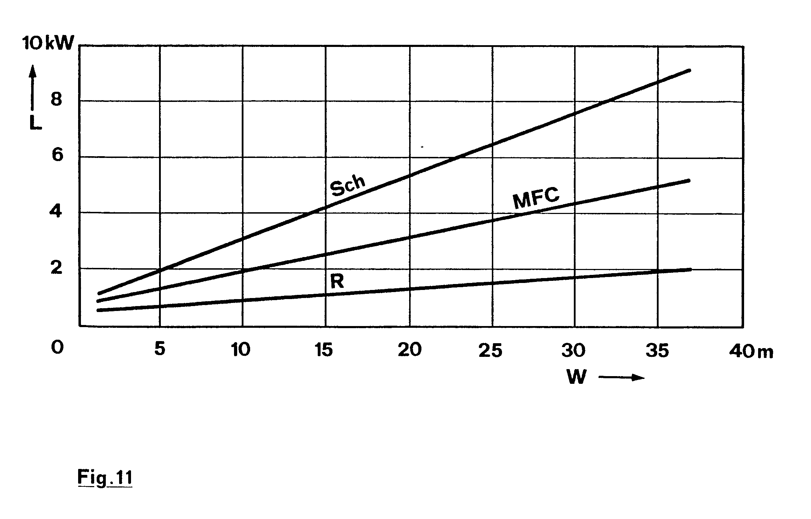

In Fig. 11 ist ein Vergleichsversuch für die Leistungsaufnahme bei der Förderung von Zement in Abhängigkeit von der Förderstrecke W aufgetragen, wobei die geförderte Menge 40 t/h beträgt. Ein Schneckenförderer, mit Sch bezeichnet, nimmt offensichtlich weitaus die grösste Leistung auf. Die Leistungsaufnahme einer mit R bezeichneten, 10 % geneigten pneumatischen Förderrinne ist sehr klein. Dabei muss jedoch berücksichtigt werden, dass die Neigung einen wesentlichen konstruktiven Aufwand erfordert und viel Raum beansprucht.

Die Leistungsaufnahme der erfindungsgemässen Vorrichtung gemäss der Variante von Fig. 3 bis 5 ist mit MFC bezeichnet. Diese Leistungsaufnahme ist bei geringem konstruktivem Aufwand verhältnismässig klein, obwohl die Förderrinne wie beim Schneckenförderer horizontal angeordnet ist.

**Patentansprüche**

1. Förderrinne (10) für den Transport von staubförmigen oder feinkörnigen, trockenen Schüttgütern (46) mit einem Förderbereich und einem durch ein gas- und flüssigkeitsdurchlässiges Material abgetrennten Bereich für die Zufuhr des Fluidisiermediums, welche mindestens je einen geschlossenen Förderkanal (32), einen geschlossenen Fluidisierkanal (36) mit Zufuhrrohr (38), einen dazwischen liegenden Fluidisierboden (42) und ein Aussenrohr (34) umfasst und etwa horizontal verläuft, dadurch gekennzeichnet, dass über dem Fluidisierboden (42) Vortriebsdüsen (50) mit wenigstens einer Austrittsöffnung für ein gasförmiges oder flüssiges Vortriebsmedium angeordnet sind.

2. Förderrinne (10) nach Anspruch 1, dadurch gekennzeichnet, dass ein Zufuhrrohr (44) für das Vortriebsmedium in das Aussenrohr (34) und die Vortriebsdüsen (50) in einen Hohlraum (48) zwischen dem Aussenrohr (34) und dem/den Förderkanal/Förderkanälen (32) sowie dem/den Fluidisierkanal/Fluidisierkanälen (36) münden.

3. Förderrinne (10) nach Anspruch 1 oder 2, dadurch gekennzeichnet, dass die Vortriebsdüsen (50) im untersten Bereich der Seitenwände (52) des/der Förderkanals/Förderkanäle (32) gleichständig auf mindestens einer Ebene angeordnet sind, vorzugsweise in einem horizontalen Abstand von 3-10 cm.

4. Förderrinne (10) nach Anspruch 2 oder 3, dadurch gekennzeichnet, dass die Vortriebsdüsen (50) in bezug auf die Seitenwände (52) des/der Förderkanals/Förderkanäle (32) einen horizontalen Winkel (α) von 10-30° und eine Bohrung von vorzugsweise 1-2 mm haben.

5. Förderrinne (10) nach einem der Ansprüche 1 bis 4, dadurch gekennzeichnet, dass der Fluidisierboden (42) einen Stützboden (58) hat, in welchem Vortriebsdüsen (60) mit horizontal oder leicht nach oben weisender/n Austrittsbohrung/en (62) im Austrittsbereich verankert sind, wobei ihr Abstand quer zur Förderrichtung vorzugsweise 2-5 cm, in Förderrichtung vorzugsweise 3-10 cm beträgt.

6. Förderrinne (10) nach Anspruch 5, dadurch gekennzeichnet, dass die Vortriebsdüsen (60) in bezug auf die Längsrichtung der Förderrinne (10) seitlich abgedreht und/oder in Förderrichtung wechselständig angeordnet sind.

7. Förderrinne (10) nach Anspruch 6, dadurch gekennzeichnet, dass die Vertikalebene durch die Längsachse einer leicht seitlich abgedrehten Vortriebsdüse (60) von der Vertikalachse der in Förderrichtung nächsten Vortriebsdüse (60) einen Abstand hat, der dem 2 bis 3-fachen Durchmesser der Austrittsöffnung entspricht.

8. Förderrinne (10) nach einem der Ansprüche 1 bis 7, dadurch gekennzeichnet, dass das Zufuhrrohr für die Fluidisierung (38) und das Rohr für den Vortrieb (44) zu einem gemeinsamen Antriebsaggregat fahren.

9. Förderrinne (10) nach einem der Ansprüche 1 bis 8, dadurch gekennzeichnet, dass Förderkanal/Förderkanäle (32), Fluidisierkanal/Fluidisierkanäle (36) und/oder der Hohlraum (48) für das Vortriebsmedium mit Vorrichtungen zum Heizen, Kühlen, Trennen, Sichten, Verbrennen und/oder Adsorbieren des Fördergutes (46) bzw. Teilen davon ausgerüstet ist/sind.

10. Verfahren zum Betrieb der Vorrichtung nach einem der Ansprüche 1 bis 9, dadurch gekennzeichnet, dass das Fluidisiermedium mit einem Überdruck von 100-500 mm WS und das Vortriebsmedium mit einem Überdruck von 700-1500 mm WS in den/die Förderkanal/Förderkanäle (32) eingeleitet werden.

11. Verfahren nach Anspruch 10, dadurch gekennzeichnet, dass die Staubluft mit einem relativen Unterdruck von 20 mm WS aus dem/den Förderkanal/Förderkanälen abgezogen und der Reinigung zugeführt wird.

**Claims**

1. Conveying trough (10) for the transport of powdery or fine-grained, dry fluent solid materials (46) having a conveying area and an area separated by a gas-permeable and liquid-permeable material and intended for the supply of the fluidizing medium, which comprises in each case at least one closed conveying channel (32), one closed fluidizing channel (36) having a supply tube (38), one fluidizing base (42) located in between, and one outer tube (34) and runs approximately horizontally, characterized in that propulsion nozzles (50) having at least one discharge opening for a gaseous or liquid propulsive medium are arranged above the fluidizing base (42).

2. Conveying trough (10) according to Claim 1 characterized in that a supply tube (44) for the propulsive medium leads into the outer tube (34), and the propulsion nozzles (50) lead into a hollow space (48) between the outer tube (34) and the conveying channel/conveying channels (32) and also the fluidizing channel/fluidizing channels (36).

3. Conveying trough (10) according to Claim 1 or 2, characterized in that the propulsion nozzles (50) in the lowermost area of the side walls (52) of the conveying channel/conveying channels (32), are arranged in the same positions on at least one plane, preferably at a horizontal distance of 3 - 10 cm.

4. Conveying trough (10) according to Claim 2 or 3, characterized in that the propulsion nozzles (50), with respect to the side walls (52) of the conveying channel/conveying channels (32), have a horizontal angle ($\alpha$) of 10 - 30° and a bore of preferably of 1 - 2 mm.

5. Conveying trough (10) according to any of Claims 1 to 4, characterized in that the fluidizing base (42) has a supporting base (58) in which propulsion nozzles (60) having a discharge bore/bores (62) pointing horizontally or slightly upwards are anchored in the discharge area, their distance apart preferably being 2 - 5 cm transversely to the conveying direction and 3 - 10 cm in the conveying direction.

6. Conveying trough (10) according to Claim 5, characterized in that the propulsion nozzles (60), with respect to the longitudinal direction of the conveying trough (10), are turned aside and/or arranged in alternate positions in the conveying direction.

7. Conveying trough (10) according to Claim 6, characterized in that the vertical plane through the longitudinal axis of a propulsion nozzle (60) turned aside slightly is at a distance from the vertical axis of the next propulsion nozzle (60) in the conveying direction which corresponds to 2 to 3 times the diameter of the discharge opening.

8. Conveying trough (10) according to any of Claims 1 to 7, characterized in that the supply tube for the fluidizing (38) and the tube for the propulsion (44) lead to a common drive unit.

9. Conveying trough (10) according to any of Claims 1 to 8, characterized in that the conveying channel/conveying channels (32), fluidizing channel/ fluidizing channels (56), and/or the hollow space (48) for the propulsive medium is/are equipped with devices for heating, cooling, separating, screening, burning and/or adsorbing the material (46) to be conveyed or parts thereof.

10. Method of operating the device according to any of Claims 1 to 9, characterized in that the fluidizing medium is fed into the conveying channel/conveying channels (32) at a positive pressure of 100 - 500 mm water head, and the propulsive medium is fed into the conveying channel/conveying channels (32) at a positive pressure of 700 - 1500 mm water head.

11. Method according to Claim 10, characterized in that the dust-laden air is drawn off from the conveying channel/conveying channels and fed to the purifying system at a relative vacuum of 20 mm water head.

**Revendications**

1. Goulotte de transport (10) pour le transport de produits en vrac (46) secs, sous forme de poussière ou à granulométrie fine, comportant une zone de transport et une zone, séparée par un matériau perméable au gaz et au liquide, pour l'amenée du medium de fluidisation et comportant au moins respectivement un canal de transport fermé (32), un canal de fluidisation fermé (36) avec tube d'amenée (38), un fond fluidisant (42) situé entre eux et un tube extérieur (34), et dirigée à peu près horizontalement, caractérisée

en ce qu'au-dessus du fond fluidisant (42) sont disposées des buses de propulsion (50) présentant au moins une ouverture de sortie pour un medium de transport gazeux ou liquide.

2. Goulotte de transport (10) selon la revendication 1, caractérisée en ce qu'un tube d'amenée (44) du medium de propulsion débouche dans le tube extérieur (34); et en ce que les buses de propulsion (50) débouchent dans un espace creux (48) situé entre le tube extérieur (34) et le/les canal de transport/canaux de transport (32) ainsi qu'entre le tube extérieur (34) et le/les canal de fluidisation/canaux de fluidisation (36).

3. Goulotte de transport (10) selon la revendication 1 ou 2, caractérisée en ce que les buses de propulsion (50) sont disposées dans la zone la plus inférieure des parois latérales (52) du/des canal de transport/canaux de transport (32), de même façon sur au moins un plan, de préférence à une distance horizontale de 3-10 cm.

4. Goulotte de transport (10) selon la revendication 2 ou 3, caractérisée en ce que les buses de propulsion (50) font, avec les parois latérales (52) du/des canal de transport/canaux de transport (32) un angle horizontal (α) de 10-30° et ont un alésage de, de préférence, 1-2 mm.

5. Goulotte de transport (10) selon l'une des revendications 1 à 4, caractérisée en ce que le fond fluidisant (42) comprend un fond d'appui (58) dans lequel sont accrochées, dans la zone de sortie, des buses de propulsion (60) présentant un ou des alésages (62) horizontal/horizontaux ou légèrement incliné/inclinés vers le haut, étant précisé que leur écartement, mesuré transversalement à la direction du transport, atteint de préférence 2-5 cm, et, mesuré dans la direction du transport, de préférence 3-10 cm.

6. Goulotte de transport (10) selon la revendication 5, caractérisée en ce que les buses de propulsion (60) sont orientées sur le côté par rapport à la direction longitudinale de la goulotte de transport (10) et/ou sont disposées de façon alternée dans la direction du transport.

7. Goulotte de transport (10) selon la revendication 6, caractérisée en ce que le plan vertical passant par l'axe longitudinal d'une buse de propulsion (60) légèrement orientée sur le côté se trouve à une distance de l'axe vertical de la buse de propulsion (60) suivante dans la direction du transport qui correspond à deux à trois fois le diamètre de l'ouverture de sortie.

8. Goulotte de transport (10) selon l'une des revendications 1 à 7, caractérisée en ce que le tube d'amenée pour la fluidisation (38) et le tube pour la propulsion (44) sont reliés à un groupe d'entraînement commun.

9. Goulotte de transport (10) selon l'une des revendications 1 à 8, caractérisée en ce que le canal de transport/les canaux de transport (32), le canal de fluidisation/les canaux de fluidisation (36) et/ou l'espace creux (48) prévu pour le medium de propulsion est équipé/sont équipés de dispositifs pour chauffer, refroidir, séparer, trier, griller et/ou adsorber le produit transporté (46) ou des portions de ce produit.

10. Procédé pour l'exploitation du dispositif conforme à l'une des revendications 1 à 9, caractérisé en ce que l'on introduit le medium de fluidisation avec une surpression de 100-500 mm de hauteur d'eau (10-50 millibars) et le medium de propulsion avec une surpression de 700-1500 mm de hauteur d'eau (70-150 millibars) dans le/les canal de transport/canaux de transport (32).

11. Procédé selon la revendication 10, caractérisé en ce que l'air poussiéreux est extrait hors du/des canal de transport/ canaux de transport avec une dépression relative de 20 mm de hauteur d'eau (2 millibars) et amené au nettoyage.

Fig. 1

Fig. 2

1

**Fig. 3**

**Fig. 4**

**Fig. 5**

Fig. 6

Fig. 7

Fig. 8

Fig. 9

Fig. 10

Fig.11

0 189 005